# EUROPÄISCHE PATENTSCHRIFT

(11) **EP 0 467 411 B1**
(45) Veröffentlichungstag und Bekanntmachung des Hinweises auf die Patenterteilung: **28.09.1994**
(21) Anmeldenummer: 91112209.1
(22) Anmeldetag: 20.07.1991
(51) Int. Cl.: B05C 5/00

(54) **Giessvorrichtung zum Beschichten von Teilen mit rieselfähigem oder fliessfähigem Beschichtungsmaterial**
Apparatus for curtain coating of articles with a liquid or fluid material
Dispositif de recouvrement de pièces par rideau de matériel de revêtement liquide ou fluide

(30) Priorität: 20.07.1990 DE 4023158
(43) Veröffentlichungstag der Anmeldung: 22.01.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: Strohbeck, Ulrich, W-7000 Stuttgart 80 (DE)

(56) Entgegenhaltungen:
- EP-A- 0 195 276
- EP-A- 0 338 617
- CH-A- 435 048
- PATENT ABSTRACTS OF JAPAN vol. 11, no. 47 (C-403)(2494)
- 13. Februar 1987 & JP-A-61 212 360 ( NATL HOUSE IND CO LTD ) 20. September 1986

## Beschreibung

### Technisches Gebiet

Die Erfindung bezieht sich auf eine Gießvorrichtung zum Beschichten von Teilen mit rieselfähigem oder fließfähigem Beschichtungsmaterial gemäß dem Oberbegriff des Patentanspruchs 1.

Gießvorrichtungen, die einen Vorratsbehälter für das Beschichtungsmaterial mit wenigstens einer Gießöffnung, aus der ein senkrecht fallender Gießfilm austritt, und eine Fördereinrichtung aufweisen, werden beispielsweise zum Beschichten von Spanplatten etc. mit Nitro-, UV-, "Wasser"-Lack oder Pulvermaterialien eingesetzt.

### Stand der Technik

Beispielsweise beim Beschichten von Spanplatten ist es in vielen Fällen erforderlich, daß die senkrechten Stirnflächen der waagrecht der Vorrichtung zugeführten Spanplatten vollkommen frei von Beschichtungsmaterial bleiben. In anderen Fällen ist es dagegen erforderlich, die senkrechte vordere und hintere Stirnfläche definiert zu beschichten.

Bei Gießvorrichtungen, bei denen der aus der Gießöffnung austretende Gießfilm "frei fällt", tritt häufig das Problem auf, daß beim Zuführen des zu beschichtenden Teils die vordere senkrechten Stirnflächen beim Durchstoßen des senkrecht fallenden Gießfilms unkontrolliert mit Beschichtungsmaterial beaufschlagt wird.

Deshalb ist vorgeschlagen worden, die Teile so zuzuführen, daß die vordere Stirnflächen in Bezug auf den senkrecht fallenden Gießfilm leicht nach vorne geneigt ist, so daß das Teil mit der oberen Querkante Zuerst durch den Gießfilm stößt. Bei einer derartigen Anordnung tritt zwar keine Verschmutzung auf, eine nach vorne geneigte Position der Teile ist aber ungünstig, da hierzu eine nicht horizontal verlaufende Förderbahn oder eine nicht waagrechte Auflage der Teile auf der horizontal verlaufenden Förderbahn notwendig ist. Dies ist in Verbindung mit dem gesamten Prozeßablauf, der im wesentlichen auf die Beschichtung waagrechter Flächen ausgerichtet ist, in der Regel nicht praktikabel.

Zur Lösung dieses Problems ist in der EP 0 195 276 B1 vorgeschlagen worden, zwischen dem Vorratsbehälter für das Beschichtungsmaterial und der zu beschichtenden Fläche, eine Elektrodenanordnung vorzusehen, an die eine Hochspannungseinrichtung eine Hochspannung anlegt.

Von dieser Elektrodenanordnung fließt ein Ionenstrom zu dem Gießfilm, der diesen ionisiert und damit elektrisch auflädt (vgl. beispielsweise den Anspruch 1 der EP 0 195 276 B1). Durch die zwischen dem elektrisch aufgeladenen Gießfilm und der Elektrodenanordnung wirkenden elektrischen Kräfte wird der Gießfilm aus der Senkrechten abgelenkt.

Diese aus der EP 0 195 276 B1 bekannte Gießvorrichtung, von der im übrigen bei der Formulierung des Oberbegriffs des Anspruchs 1 ausgegangen worden ist, hat jedoch eine Reihe von Nachteilen:
Um eine konstante Ablenkung des Gießfilms zu erreichen, muß die Aufladung des Gießfilms konstant gehalten werden. In der Praxis ist jedoch davon auszugehen, daß die von der Ionisierungselektrode absprühenden Ladungen unkontrolliert über den Gießfilm und/oder über geerdete Teile abfließen, und somit die Ablenkung nicht konstant bleibt. Weiter ist gerade beim Einsatz von Wasserlacken, wie sie gegenwärtig insbesondere aus Umweltschutzgründen verstärkt zur Anwendung kommen, der Gießfilm gut leitend, so daß die auftreffenden Ionen sofort neutralisiert werden, so daß sich die bekannte gattungsgemäße Gießvorrichtung nicht oder zumindest nur eingeschränkt für das Beschichten mit Wasserlacken eignet. Vor allem aber ist die aus der EP 0 195 276 B1 bekannte Gießvorrichtung aufgrund des fließenden Ionenstromes nicht in Räumen mit explosibler Atmosphäre einsetzbar; dies ist gerade in Lackier-Betriebsstätten von Nachteil.

### Darstellung der Erfindung

Es ist Aufgabe der Erfindung, eine Gießvorrichtung zum Beschichten von Teilen mit rieselfähigem oder fließfähigem Beschichtungsmaterial, bei der aus wenigstens einer in einem Vorratsbehälter für das Beschichtungsmaterial vorgesehenen Gießöffnung ein senkrecht fallender Gießfilm austritt, und eine Fördereinrichtung eine Relativbewegung zwischen dem zu beschichtenden Teil und der oder den Gießöffnungen erzeugt, derart weiterzubilden, daß die vordere und hintere Stirnfläche des zu beschichtenden Teils definiert beschichtet bzw. definiert nicht beschichtet werden kann, ohne daß die Verwendbarkeit der Gießvorrichtung für bestimmte Lackarten und in Räumen, in denen bestimmte Sicherheitsanforderungen - insbesondere gegen Explosionen - erfüllt sein müssen, eingeschränkt würde.

Eine erfindungsgemäße Lösung dieser Aufgabe ist im Patentanspruch 1 angegeben. Weiterbildungen der Erfindung sind Gegenstand der Unteransprüche.

Überraschenderweise kann die gestellte Aufgabe dadurch gelöst werden, daß weiterhin von einer Gießvorrichtung gemäß dem Oberbegriff des Anspruchs 1 ausgegangen wird. Erfindungsgemäß ist jedoch die Elektrodenanordnung so ausgebildet, daß sie wenigstens eine Elektrode aufweist, die derart ausgebildet ist, daß sie Influenzladungen im Gießfilm induziert.

Damit fließt von der oder den Elektroden der Elektrodenanordnung kein Ionenstrom zum Gießfilm. Vielmehr werden durch das elektrische Feld, das durch die zwischen der Elektrode und den Vorratsbehälter angelegte Potentialdifferenz erzeugt wird, ungleichnamige Influenz- bzw. "Spiegelladungen" im Gießfilm influenziert. Diese Influenzladungen führen zu einer anziehenden Kraft, die den Gießfilm auf die Elektrode hin "zieht". Diese anziehende Kraft wirkt - anders als bei der gattungsgemäßen Gießvorrichtung - im gesamten Bereich des aufgebauten elektrischen Feldes, und nicht erst unterhalb der beim Stand der Technik verwendeten Ionisierungselektrode.

Da bei der erfindungsgemäßen Gießvorrichtung kein Strom zwischen Elektrodenanordnung und Gießfilm fließt, tritt das beim Stand der Technik bestehende Problem der Funkenbildung nicht auf, d.h. es können gefahrlos alle Arten von Lackmaterial verwendet werden. Aufgrund der auf Influenzladungen basierenden Anziehungskraft zwischen Elektrodenanordnung und Gießfilm ist es mit der erfindungsgemäßen Gießvorrichtung möglich, auch gut leitfähige Wasserlacke zu verarbeiten.

Im Anspruch 2 ist angegeben, daß die Elektrodenanordnung eine Elektrode aufweist, die in Förderrichtung nach dem Gießfilm angeordnet ist. Durch die Ablenkung des Gießfilmes durch elektrische "Influenz-Kräfte" in Förderrichtung aus der Senkrechten stoßen die zu beschichtenden Teile auch bei herkömmlichem waagrechtem Transport mit der oberen Querkante der Stirnfläche zuerst durch den Gießfilm.

Hierdurch können Gießvorrichtungen in herkömmlicher Weise betrieben werden, d.h. die zu beschichtenden Teile können waagrecht liegend auf einer horizontal laufenden Förderbahn durch den Gießfilm stoßen, ohne daß die charakteristischen Verschmutzungen der vorderen Stirnflächen mit Beschichtungsmaterial auftreten. Dadurch läßt sich z.B. die Ausschußrate wesentlich reduzieren.

Der erfindungsgemäße Grundgedanke, den in Art eines Vorhangs im wesentlichen senkrecht fallenden Gießfilm durch "Influenz-Kräfte" aus der Senkrechten auszulenken, kann nicht nur dazu verwendet werden, insbesondere die vordere Stirnfläche von zu beschichtenden Teilen nicht zu beschichten, sondern auch dazu, die vordere und/oder hintere Stirnfläche gezielt und definiert zu beschichten.

Hierzu weist gemäß Anspruch 3 die Elektrodenanordnung zusätzlich oder ausschließlich in Förderrichtung vor dem Gießfilm wenigstens eine Elektrode zwischen der oder den Gießöffnungen und der zu beschichtenden Fläche des Teils auf; in gleicher Weise wie bei der im Anspruch 2 gekennzeichneten Gießvorrichtung legt eine Hochspannungseinrichtung zwischen den Vorratsbehälter und die Elektrode eine Potentialdifferenz an.

Durch diese in Förderrichtung vor dem Gießfilm angeordnete Elektrode kann der Gießfilm in Richtung auf die vordere Stirnfläche abgelenkt werden, so daß auch die vordere Stirnfläche gezielt beschichtet werden kann.

Durch die im Anspruch 15 gekennzeichnete Weiterbildung, gemäß der wenigstens ein Sensor vorgesehen ist, der das jeweils zugeführte zu beschichtende Teil erfaßt, und dessen Ausgangssignal an eine Steuereinheit angelegt ist, die die Potentialdifferenz einstellt, kann dann die Ablenkung des Gießfilms aus der Senkrechten so variiert werden, daß auch die hintere Stirnfläche gezielt beschichtet werden kann.

Die erfindungsgemäß zwischen Elektrode und Vorratsbehälter angelegte Potentialdifferenz kann nicht nur ein beliebiges Vorzeichen haben, da nicht die Richtung der Feldstärke, sondern im wesentlichen nur die erzeugten Influenzladungen für die ausgeübte Kraft und deren Richtung entscheidend sind, sondern es ist auch möglich, die Potentialdifferenz auf einem beliebigen "Niveau" anzulegen.

Insbesondere ist es gemäß Anspruch 4 möglich, den Vorratsbehälter zu erden. Diese Ausführung hat nicht nur sicherheitstechnische Vorteile, sondern auch den Vorteil einer unabhängig von der Art des verwendeten Lackmaterials reproduzierbaren Auslenkung, da der Vorratsbehälter stets einen definierten Gegenpol zur Influenzelektrode darstellt.

Daneben ist es aber auch möglich, den Gießfilm vor der Elektrode aufzuladen (Anspruch 5). Die Aufladung des Gießfilms kann gemäß Anspruch 6 beispielsweise durch einen auf Hochspannung liegenden Vorratsbehälter, durch eine hochspannungsführende Elektrode im Gießspalt oder durch zwischen der Ablenkelektrode und dem Vorratsbehälter angeordnete an Hochspannung liegende Koronaelektroden erzeugt werden. In diesem Falle ist es möglich, die Elektrode zu erden oder auf ein (variables) Zwischenpotential zu legen (Anspruch 7). Im letzteren Falle ist es möglich, die Ablenkung des Gießfilmes zu variieren.

Die Elektroden können eine im Prinzip beliebige Form haben: So ist es - wenn zusätzlich auch Seitenflächen beschichtet werden sollen - möglich, speziell geformte, annähernd U-förmige Elektroden zu verwenden, die den Gießfilm "um die Seitenkanten herum" ziehen.

In vielen Anwendungsfällen bevorzugte Elektrodenformen, die insbesondere einen durch eine als Spalt ausgebildete Gießöffnung erzeugten Gießfilm, der die Form eines "Vorhanges " hat, von den Stirnflächen ablenken bzw. auf die Stirnflächen lenken, sind in den Ansprüchen 8 und 9 gekennzeichnet:
Gemäß Anspruch 8 hat die Elektrode die Form eines Zylinders, dessen Längsachse sich wenigstens näherungsweise parallel zur Verbindungslinie der Gießöffnungen erstreckt. Die Elektrode kann dabei als "Draht" oder als "Hohlzylinder" ausgebildet sein.

Auch die im Anspruch 9 gekennzeichnete Ausbildung, gemäß der die Elektrode die Form einer Platte hat, ist in diesem Falle möglich.

Da erfindungsgemäß kein Ionenstrom zwischen der Elektrodenanordnung und dem Gießfilm fließt, ist es gemäß Anspruch 10 bevorzugt, wenn eine Isolationsschicht die Elektroden der Elektrodenanordnung umgibt. Hierdurch ist ist nur die Berührungssicherheit gewährleistet, sondern es wird auch die Sicherheit in explosionsgefährdeten Räumen weiter erhöht.

Weiterhin ist es möglich, die die Elektroden der Elektrodenanordnung umgebende Schicht auch als schwach leitende Schicht die Elektrode auszubilden, so daß auf der Außenseite der Elektrode entstehende ungleichnamige Ladungen abfließen können (Anspruch 11). Diese schwach leitende Schicht kann gemäß Anspruch 12 beispielsweise aus Weich-PVC oder mit Graphit dotiertem Teflon bestehen. Selbstverständlich ist aber auch ein Mehrschichtaufbau, bestehend aus einem Isolator und einem schwachen Leiter möglich.

Im Anspruch 13 ist eine Größenordnung für die angelegte Potentialdifferenz angegeben, die für übliche Gießvorrichtungen und Beschichtungsmaterialien insbesondere zwischen 10 und 100 kV betragen kann.

Da die angelegte Potentialdifferenz im wesentlichen über die erzeugten Influenz-Ladungen wirkt, ist das Vorzeichen der Potentialdifferenz für die Wirkung nicht entscheidend. Insbesondere ist es auch möglich, nicht nur eine Gleichspannung, sondern auch eine Wechselspannung zwischen Elektrode und Vorratsbehälter anzulegen. Die Höhe der Potentialdifferenz kann ferner dem jeweiligen Problem und insbesondere der gewünschten Ablenkung angepaßt werden (Anspruch 14).

Weiterhin ist es gemäß Anspruch 15 möglich, über wenigstens einen Sensor, der das jeweils zugeführte zu beschichtende Teil erfaßt, und dessen Ausgangssignal an eine Steuereinheit angelegt ist, die Potentialdifferenz so einzustellen, daß der Gießfilm beispielsweise dann, wenn eine Kante des zu beschichtenden Teils in den Bereich des Gießfilms gelangt, abzulenken, während er ansonsten zumindest angenähert senkrecht fällt.

Da - wie sich erfindungsgemäß herausgestellt hat - der Grad der Gießfilmablenkung stark von der Dicke des Gießfilms abhängig ist, kann dieser Effekt auch dazu benutzt werden, die Gießspalt-Breite einzustellen. Hierzu ist ein Sensor vorgesehen, der den Winkel der Gießfilm-Ablenkung bei einer bestimmten Potentialdifferenz erfaßt. Hieraus kann eines Steuer- und Auswerteeinheit die Dicke des Gießfilms bestimmen, die wiederum zur Gießspalt-Breite proportional ist. Entsprechend der bestimmten momentanen Gießspalt-Breite kann dann die gewünschte Gießspalt-Breite eingestellt werden.

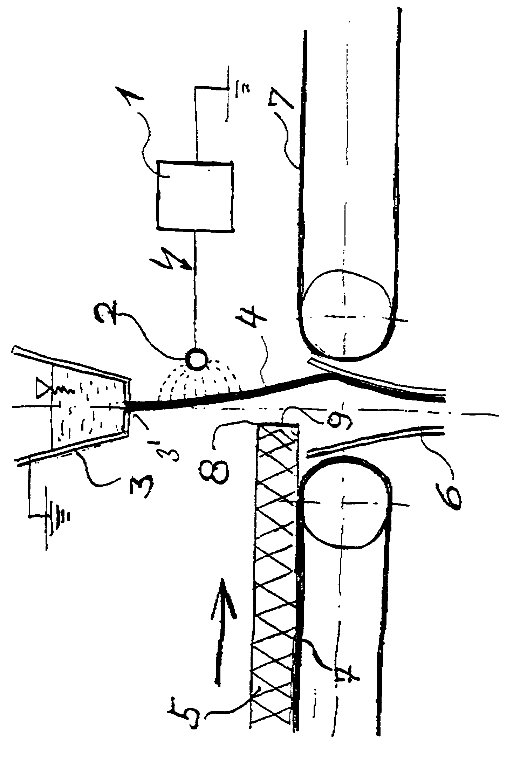

### Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung beschrieben,
deren einzige Figur einen Längsschnitt durch eine erfindungsgemäße Gießvorrichtung zeigt.

### Darstellung eines Ausführungsbeispiels

Eine regelbare Hochspannungsquelle 1 legt eine Potentialdifferenz an eine draht- oder rohrförmige Elektrode 2 an, deren Außendurchmesser bei dem gezeigten Ausführungsbeispiel 10 mm beträgt, und die bei dem gezeigten Ausführungsbeispiel aus elektrisch leitendem Material besteht, das eine Isolationsschicht umgibt.

Die Elektrode 2 ist parallel zu einem in einem geerdeten Vorratsbehälters 3 vorgesehenen Gießspalt 3' angeordnet. Aus dem Gießspalt tritt ein Gießfilm 4 aus.

Die Elektrode 2 befindet sich in Förderrichtung betrachtet hinter dem Gießfilm sowie oberhalb des zu beschichtenden Teils 5. Die i.a. waagrecht angeordnete Elektrode weist eine Länge auf, die in etwa der Breite des Gießfilms entspricht.

Auf den Gießfilm 4 wird von der hochspannungsführenden Elektrode 2 durch Influenzeffekte des gestrichelt angedeuteten elektrischen Feldes eine Anziehungskraft ausgeübt, so daß dieser während des Falles aus dem Gießspalt in einen Auffangtrichter 6 zur Elektrode 2 hin abgelenkt wird. Dadurch stellt sich ein über die Höhe der angelegten Spannung regelbarer, vorzugsweise 5° - 10° schrägstehender Gießfilm ein, durch den das zu beschichtende Teil 5, das auf einer horizontal laufenden Förderbahn 7 liegt, mit der oberen Querkante 8 der senkrechten Stirnfläche 9 zuerst stößt, so daß die unkontrollierte Verschmutzung der Stirnfläche verhindert wird.

Die Influenzwirkung der hochspannungsführenden Elektrode 2 ist weitgehend unabhängig davon, ob sie freiliegt oder mit einem Isolierstoff (mit z.B. 10 mm Dicke) ummantelt ist. Eine Ummantelung hat aber wesentliche sicherheitstechnische Vorteile, da in einem solchen Fall bei einer Berührung der Elektrode durch leitfähige Gegenstände bzw. beim Anfassen keine Funkenentladungen ausgelöst werden können.

Die Höhe der erforderlichen Kochspannung hängt u.a. von der Geometrie und der Position der Elektrode sowie von den elektrischen Eigenschaften des Beschichtungsmaterials ab. Übliche Werte liegen im Bereich von 10 bis ca 70-100 kV.

Die beschriebene Einrichtung zur Ablenkung des Gießfilms kann prinzipiell auch so betrieben werden, daß der Gießfilm 4 elektrisch aufgeladen wird und die Elektrode 2 nicht an Hochspannung, sondern auf Erdpotential oder einem Zwischenpotential liegt. Auch in diesem Fall bewirken Influenzkräfte eine Anziehungskraft zwischen der feststehenden (geerdeten) Elektrode und dem aufgeladenen Gießfilm. Die Aufladung des Gießfilms kann durch zwei verschiedene Prinzipien erfolgen:
- durch Leitungsaufladung, z. B. dadurch, daß der Vorratsbehälter an Hochspannung gelegt wird bzw. mittels einer hochspannungsführenden Elektrode im Gießspalt
- durch Ionisationsaufladung, d. h. dadurch, daß der Gießfilm mittels Luftionen beaufschlagt wird, die durch außenliegende hochspannungsführende Koronaelektroden erzeugt werden.

Diese Betriebsweise erfordert jedoch einen wesentlich größeren verfahrenstechnischen Aufwand als die in der Figur dargestellte Lösung, da eine exakt konstant bleibende Aufladung des Gießfilms sichergestellt sein muß, um eine schwankende Ablenkung zu verhindern. Insbesondere dürfen die Ladungen nicht vom Gießfilm unkontrolliert über geerdete Teile der Gießvorrichtung abfließen. Hierzu müssen z.B. alle mit dem aufgeladenen Gießfilm in Berührung kommenden Teile elektrisch isoliert angeordnet werden.

Vorstehend ist die Erfindung anhand eines Ausführungsbeispiels ohne Beschränkung des allgemeinen Erfindungsgedankens näher beschrieben worden, innerhalb dessen selbstverständlich die verschiedensten Modifikationen möglich sind:
So ist es insbesondere möglich, zusätzlich oder anstelle der beschriebenen Elektrode 2 wenigstens eine Elektrode zwischen der oder den Gießöffnungen und der zu beschichtenden Fläche des Teils in Förderrichtung betrachtet vor den Gießfilm vorzusehen. Durch diese in Förderrichtung vor dem Gießfilm angeordnete Elektrode kann der Gießfilm in Richtung auf die vordere Stirnfläche abgelenkt werden, so daß auch die vordere Stirnfläche gezielt beschichtet werden kann, bzw. eine Beschichtung der hinteren Stirnfläche mit Sicherheit vermieden wird.

## Patentansprüche

1. Gießvorrichtung zum Beschichten von Teilen mit rieselfähigem oder fließfähigem Beschichtungsmaterial,
mit einem Vorratsbehälter (3) für das Beschichtungsmaterial, der wenigstens eine Gießöffnung (3') aufweist, aus dem das Beschichtungsmaterial als Gießfilm (4) austritt,
einer Fördereinrichtung (7), die eine Relativbewegung zwischem dem zu beschichtenden Teil (5) und der oder den Gießöffnungen erzeugt, und
einer Elektrodenanordnung (2), die zwischen der oder den Gießöffnungen (3') und der zu beschichtenden Fläche des Teils (5) vorgesehen ist, und zwischen der und dem Gießfilm bzw. dem Vorratsbehälter eine Hochspannungseinrichtung (1) eine Hochspannung anlegt,
dadurch **gekennzeichnet**, daß die Elektrodenanordnung wenigstens eine Elektrode (2) aufweist, die derart ausgebildet ist, daß sie Influenzladungen im Gießfilm (4) induziert.

2. Gießvorrichtung nach Anspruch 1,
dadurch **gekennzeichnet**, daß die Elektrode (2) in Förderrichtung nach dem Gießfilm (4) angeordnet ist.

3. Gießvorrichtungn nach Anspruch 1 oder 2,
dadurch **gekennzeichne**t, daß die Elektrode (2) in Förderrichtung vor dem Gießfilm (4) angeordnet ist.

4. Gießvorrichtung nach einem der Ansprüche 1 bis 3,
dadurch **gekennzeichnet**, daß der Vorratsbehälter (3) geerdet ist.

5. Gießvorrichtung nach einem der Ansprüche 1 bis 3,
dadurch **gekennzeichnet**, daß der Gießfilm vor der Elektrode aufgeladen wird.

6. Gießvorrichtung nach Anspruch 5,
dadurch **gekennzeichnet**, daß die Aufladung des Gießfilms durch einen auf Hochspannung liegenden Vorratsbehälter (3), durch eine hochspannungsführende Elektrode im Gießspalt (3') oder durch zwischen der Ablenkelektrode und dem Vorratsbehälter angeordnete an Hochspannung liegende Koronaelektroden erzeugt wird.

7. Gießvorrichtung nach Anspruch 6,
dadurch **gekennzeichnet**, daß die Elektrode (2) geerdet oder auf ein Zwischenpotential gelegt ist.

8. Gießvorrichtung nach einem der Ansprüche 1 bis 7,
dadurch **gekennzeichnet**, daß die Elektrode (2) die Form eines Zylinders hat, dessen Längsachse sich wenigstens näherungsweise parallel zur Verbindungslinie der Gießöffnungen (3') erstreckt.

9. Gießvorrichtung nach einem der Ansprüche 1 bis 7,
dadurch **gekennzeichnet**, daß die Elektrode die Form einer Platte hat.

10. Gießvorrichtung nach einem der Ansprüche 1 bis 9,
dadurch **gekennzeichnet**, daß eine Isolationsschicht die Elektrode (2) umgibt.

11. Gießvorrichtung nach einem der Ansprüche 1 bis 10,
dadurch **gekennzeichnet**, daß eine schwach leitende Schicht die Elektrode (2) umgibt, durch die auf der Außenseite der Elektrode entstehende ungleichnamige Ladungen abfließen können.

12. Gießvorrichtung nach Anspruch 11,
dadurch **gekennzeichnet**, daß die schwach leitende Schicht aus Weich-PVC oder mit Graphit dotiertem Teflon besteht.

13. Gießvorrichtung nach einem der Ansprüche 1 bis 12,
dadurch **gekennzeichnet**, daß die angelegte Potentialdifferenz zwischen 10 und 100 kV beträgt.

14. Gießvorrichtung nach einem der Ansprüche 1 bis 13,
dadurch **gekennzeichnet**, daß die Potentialdifferenz zeitlich variiert.

15. Gießvorrichtung nach einem der Ansprüche 1 bis 14,
dadurch **gekennzeichnet**, daß wenigstens ein Sensor vorgesehen ist, der das jeweils zugeführte zu beschichtende Teil erfaßt, und dessen Ausgangssignal an eine Steuereinheit angelegt ist, die eine Potentialdifferenz einstellt.

16. Gießvorrichtung nach einem der Ansprüche 1 bis 15,
dadurch **gekennzeichnet**, daß die Breite des Gießspaltes einstellbar ist, und daß zur Erfassung der Gießspaltbreite ein Sensor vorgesehen ist, der den Winkel der GießfilmAblenkung erfaßt.

## Claims

1. Pouring device for coating articles with fluid or liquid coating material, with a storage container (3) for the coating material, which includes at least one pouring opening (3') from which the coating material emerges as a poured film (4), with a conveyor device (7) which generates a relative movement between the article (5) to be coated and the pouring opening or openings, and with an electrode arrangement (2) provided between the pouring opening or openings (3') and the surface to be coated of the article (5), a high-tension device (1) applying a high voltage between said electrode arrangement and the poured film or the storage container, characterised in that the electrode arrangement includes at least one electrode (2) which is so designed that it induces electrostatic charges in the poured film (4).

2. Pouring device according to claim 1, characterised in that the electrode (2) is disposed in the feed direction after the poured film (4).

3. Pouring device according to claim 1 or 2, characterised in that the electrode (2) is disposed in the feed direction before the poured film (4).

4. Pouring device according to one of claims 1 to 3, characterised in that the storage container (3) is earthed.

5. Pouring device according to one of claims 1 to 3, characterised in that the poured film is charged in front of the electrode.

6. Pouring device according to claim 5, characterised in that the charging of the poured film is generated by a storage container (3) under high tension, by a high-tension-conducting electrode in the pouring slot (3'), or by corona electrodes disposed between the deflector electrode and the storage container and placed under high tension.

7. Pouring device according to claim 6, characterised in that the electrode (2) is earthed or applied to an intermediate potential.

8. Pouring device according to one of claims 1 to 7, characterised in that the electrode (2) is in the shape of a cylinder whose longitudinal axis extends at least approximately parallel to the line of connection of the pouring openings (3').

9. Pouring device according to one of claims 1 to 7, characterised in that the electrode is in the shape of a plate.

10. Pouring device according to one of claims 1 to 9, characterised in that an insulating layer surrounds the electrode (2).

11. Pouring device according to one of claims 1 to 10, characterised in that the electrode (2) is surrounded by a slightly conductive layer, through which charges of unequal preceding sign occurring on the outer side of the electrode can flow away.

12. Pouring device according to claim 11, characterised in that the slightly conductive layer comprises soft PVC or graphite-doped Teflon.

13. Pouring device according to one of claims 1 to 12, characterised in that the applied potential difference lies between 10 and 100 kV.

14. Pouring device according to one of claims 1 to 13, characterised in that the potential difference varies with time.

15. Pouring device according to one of claims 1 to 14, characterised in that at least one sensor is provided which detects the article to be coated which is presented at any moment, and whose output signal is applied to a control unit which sets a potential difference.

16. Pouring device according to one of claims 1 to 15, characterised in that the width of the pouring slot is adjustable, and in that, in order to detect the width of the pouring slot, a sensor is provided, which detects the angle of deflection of the poured film.

## Revendications

1. Dispositif de coulée pour le revêtement de pièces par du matériau de revêtement apte à couler par ruissellement ou par écoulement, avec un réservoir (3) pour le matériau de revêtement, qui présente au moins une ouverture de coulée (3') par laquelle le matériau de revêtement s'échappe sous la forme d'un film de coulée (4), avec un transporteur (7) qui produit un mouvement relatif entre la pièce (5) à recouvrir et la ou les ouvertures de coulée, et avec un système d'électrodes (2) qui est prévu entre la ou les ouvertures de coulée (3') et la surface à recouvrir de la pièce (5), un dispositif à haute tension (1) appliquant une haute tension entre ce système d'électrodes et le film de coulée ou encore le réservoir, **caractérisé** en ce que le système d'électrodes présente au moins une électrode (2) qui est conçue de telle sorte qu'elle induit des charges électriques dans le film de coulée (4).

2. Dispositif de coulée selon la revendication 1, **caractérisé** en ce que l'électrode (2) est disposée après le film de coulée (4) dans la direction de transport.

3. Dispositif de coulée selon la revendication 1 ou 2, **caractérisé** en ce que l'électrode (2) est disposée avant le film de coulée (4) dans la direction de transport.

4. Dispositif de coulée selon l'une quelconque des revendications 1 à 3, **caractérisé** en ce que le réservoir (3) est mis à la terre.

5. Dispositif de coulée selon l'une quelconque des revendications 1 à 3, **caractérisé** en ce que le film de coulée est chargé électriquement avant l'électrode.

6. Dispositif de coulée selon la revendication 5, **caractérisé** en ce que le chargement électrique du film de coulée est produit par un réservoir (3) mis sous haute tension, par une électrode conduisant la haute tension disposée dans la fente de coulée (3'), ou par des électrodes à effet corona mises sous haute tension et disposées entre l'électrode de déviation et le réservoir.

7. Dispositif de coulée selon la revendication 6, **caractérisé** en ce que l'électrode (2) est mise à la terre ou à un potentiel intermédiaire.

8. Dispositif de coulée selon l'une quelconque des revendications 1 à 7, **caractérisé** en ce que l'électrode (2) a la forme d'un cylindre dont l'axe longitudinal s'étend au moins approximativement parallèlement à la ligne de jonction des ouvertures de coulée (3').

9. Dispositif de coulée selon l'une quelconque des revendications 1 à 7, **caractérisé** en ce que l'électrode a la forme d'une plaque.

10. Dispositif de coulée selon l'une quelconque des revendications 1 à 9, **caractérisé** en ce qu'une couche isolante entoure l'électrode (2).

11. Dispositif de coulée selon l'une quelconque des revendications 1 à 10, **caractérisé** en ce qu'une couche faiblement conductrice entoure l'électrode (2), par laquelle peuvent s'évacuer les charges de polarité contraire qui apparaissent sur le côté extérieur de l'électrode.

12. Dispositif de coulée selon la revendication 11, **caractérisé** en ce que la couche faiblement conductrice est constituée de C.P.V. mou ou de Téflon dopé de graphite.

13. Dispositif de coulée selon l'une quelconque des revendications 1 à 12, **caractérisé** en ce que la différence de potentiel appliquée est comprise entre 10 et 100 kV.

14. Dispositif de coulée selon l'une quelconque des revendications 1 à 13, **caractérisé** en ce que la différence de potentiel varie dans le temps.

15. Dispositif de coulée selon l'une quelconque des revendications 1 à 14, **caractérisé** en ce qu'il est prévu au moins un capteur, qui détecte la pièce à recouvrir chaque fois amenée et dont le signal de sortie est appliqué à une unité de commande qui règle une différence de potentiel.

16. Dispositif de coulée selon l'une quelconque des revendications 1 à 15, **caractérisé** en ce que la largeur de la fente de coulée est réglable et en ce qu'il est prévu, pour détecter la largeur de la fente de coulée, un capteur qui détecte l'angle de déviation du film de coulée.
